# EUROPÄISCHE PATENTSCHRIFT

(11) **EP 2 607 944 B1**
(45) Veröffentlichungstag und Bekanntmachung des Hinweises auf die Patenterteilung: **21.05.2014**
(21) Anmeldenummer: 12192608.3
(22) Anmeldetag: 14.11.2012
(51) Int. Cl.: G02C 1/08, G02C 5/02

(54) **Brille**
Spectacles
Lunettes

(30) Priorität: 19.12.2011 DE 102011089001
(43) Veröffentlichungstag der Anmeldung: 26.06.2013
(73) Patentinhaber: ALPINA SPORTS GmbH, 86316 Friedberg (DE)
(72) Erfinder: Zipfel, Robert, 86153 Augsburg (DE)
(74) Vertreter: Rau, Schneck & Hübner Patentanwälte Rechtsanwälte PartGmbB

(56) Entgegenhaltungen:
- EP-A1- 1 577 698
- DE-A1-102004 035 592
- GB-A- 2 181 859
- GB-A- 2 199 155
- US-B1- 7 481 529

## Beschreibung

Die Erfindung betrifft eine Brille, insbesondere eine Brille mit einer auswechselbaren Scheibe.

Es kann wünschenswert sein, bei einer Brille die Scheibe auswechselbar zu gestalten. Brillen mit auswechselbaren Scheiben sind beispielsweise aus der WO 2010/003143 A1 und der EP 1 577 698 A1 bekannt.

Es besteht fortwährend Bedarf, den Mechanismus zum Wechseln der Scheibe zu vereinfachen und zu verbessern.

Eine Aufgabe der Erfindung besteht darin, den Mechanismus zum Auswechseln der Scheibe einer Brille zu verbessern.

Diese Aufgabe wird durch die Merkmale des Anspruchs 1 gelöst. Der Kern der Erfindung besteht darin, den Rahmen einer Brille derart auszubilden, dass zwei Rahmenteile in einem ersten Bereich miteinander verbunden und in mindestens einem zweiten Bereich jeweils lösbar miteinander verbunden sind, wobei zur Sicherung der lösbaren Verbindung der Rahmenteile jeweils magnetische Elemente vorgesehen sind, durch welche die lösbare Verbindung der Rahmenteile gegen ein unbeabsichtigtes Öffnen gesichert ist.

Beim ersten Bereich handelt es sich insbesondere um einen Mittelabschnitt, d. h. einen Bereich im Nasenauflagebereich der Brille. Bei den zweiten Bereichen handelt es sich insbesondere um einen Seitenbereich der Brille.

Die ferromagnetischen Sicherungsmittel erlauben gleichzeitig ein einfaches Öffnen der lösbaren Verbindung der Rahmenteile zum Auswechseln der Scheibe. Sie bilden insbesondere einen selbsttätigen Verschlussmechanismus.

Vorteilhafterweise sind die ferromagnetischen Elemente jeweils in formschlüssig aneinander angepasste Sicherungsabschnitte der Rahmenteile integriert. Dies ermöglicht zum einen eine vorteilhafte, platzsparende Anordnung, zum anderen wird dadurch die Präzision des Verschlussmechanismus verbessert.

Die Rahmenteile können vorteilhafterweise im Seitenbereich jeweils eine parallel zu einer Longitudinalrichtung ausgerichtete Anlagefläche ausweisen. Unter Longitudinalrichtung hierbei die durch die Scheiben der Brille definierte Richtung verstanden, welche im aufgesetzten Zustand der Brille der in Longitudinalrichtung, d. h. dem Schnitt der Frontalebene und der Sagittalebene des Trägers der Brille entspricht. Die Anlagefläche ist im aufgesetzten Zustand der Brille im Wesentlichen parallel zu einem darunterliegenden Bereich des Gesichts des Trägers der Brille ausgerichtet. Sie ist vorteilhafterweise von der Vorderseite der Brille aus frei zugänglich. Hierdurch wird der Verschlussmechanismus des Rahmens besonders sicher und einfach bedienbar.

Die Rahmenteile können vorteilhafterweise jeweils eine quer zur Longitudinalrichtung ausgerichtete in Longitudinalrichtung frei zugängliche Anlagefläche aufweisen. Die quer zur Longitudinalrichtung ausgerichtete Anlagefläche und die parallel zur Longitudinalrichtung ausgerichtete Anlagefläche können eine Anlageschulter ausbilden. Hierdurch wird insbesondere die Präzision des Verschlussmechanismus verbessert.

Vorteilhafterweise ist das untere Rahmenteil zumindest bereichsweise verschwenkbar ausgebildet. Es kann einen flexibel ausgebildeten Abschnitt aufweisen. Der Abschnitt ist vorteilhafterweise derart ausgebildet, dass er eine Überdehnung des Rahmenteils zum Scheibenwechsel ermöglicht. Der flexibel ausgebildete Abschnitt ist in mindestens einer Richtung flexibel und führt somit zu einer Verschwenkbarkeit in mindestens einer Raumrichtung. Er kann auch in mehreren Richtungen flexibel ausgebildet sein und eine Verschwenkbarkeit in mindestens zwei, insbesondere mehreren Richtungen ermöglichen. Prinzipiell kann die Verschwenkbarkeit auch durch ein Gelenkelement, insbesondere ein Scharnier, Schwenk- oder Drehgelenk erreicht werden. Es ist auch möglich, das obere Rahmenteil zumindest bereichsweise verschwenkbar auszubilden.

Vorteilhafterweise ist mindestens eines der Rahmenteile aus Kunststoff. Vorzugsweise sind beide Rahmenteile aus Kunststoff. Dies erleichtert die Herstellung. Außerdem kann hierdurch das Gewicht der Brille reduziert werden.

Die Rahmenteile können im ersten Mittenabschnitt lösbar, insbesondere verrastbar, miteinander verbunden sein.

Vorteilhafterweise ist mindestens eines der Rahmenteile auswechselbar. Insbesondere das untere Rahmenteil kann auswechselbar sein, Dies ermöglicht es, die Brille flexibel an unterschiedliche Situationen und Verwendungen anzupassen.

Die Rahmenteile können auch im Mittenabschnitt fest miteinander verbunden sein. Hierdurch kann die Stabilität der Brille verbessert werden.

Zur Aufnahme der Scheibe im Rahmen können die Rahmenteile Führungsausnehmungen, insbesondere in Form von nutartigen Vertiefungen, aufweisen. Die Scheibe ist hierbei vorzugsweise formschlüssig in die Ausnehmungen einsetzbar.

Zur Verbesserung des Halts der Scheibe im Rahmen kann die Scheibe mindestens eine Rastnase aufweisen, welche mit einer dazu passenden Hinterschneidung in einem der Rahmenteile zusammenwirkt. Die Rastnase ist insbesondere in einem medialen Bereich der Brille, d. h. mittig, angeordnet.

Vorteilhafterweise können zwischen den Rahmenteilen und der mindestens einen Scheibe Lüftungsöffnungen ausgebildet sein. Hierdurch kann der Tragekomfort der Brille verbessert werden.

Weitere Vorteile, Details und Einzelheiten der Brille ergeben sich aus der Beschreibung eines Ausführungsbeispiels anhand der Zeichnungen. Es zeigen:

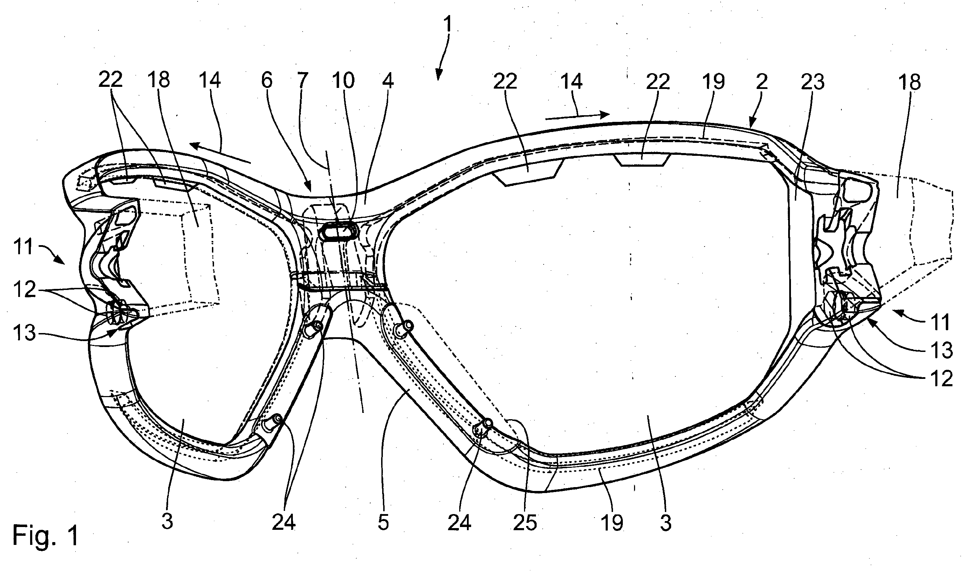

- Fig. 1: eine schematische Ansicht des Rahmens der Brille von vorne,

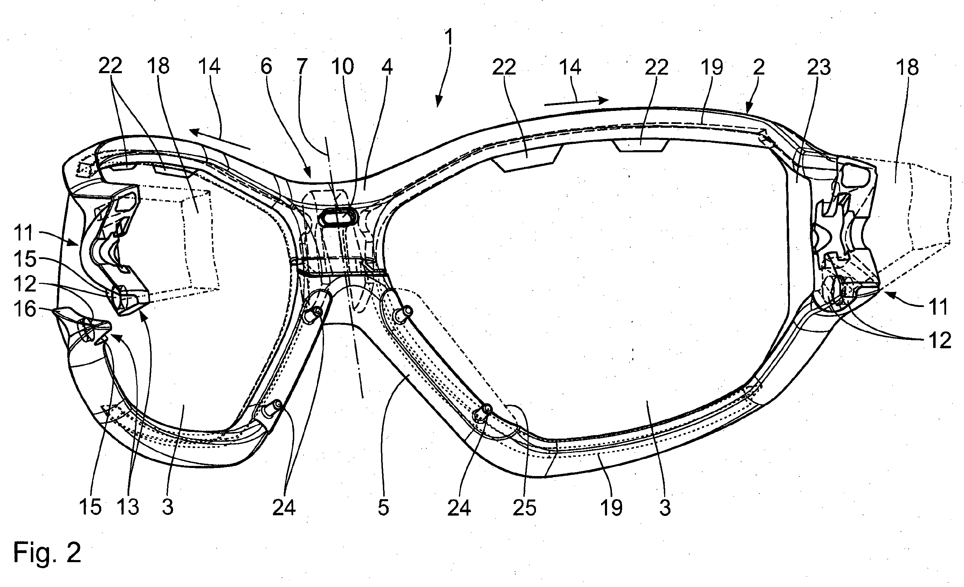

- Fig. 2: eine Ansicht gemäß Fig. 1 zur Verdeutlichung der lösbaren Verbindung der Rahmenteile im Seitenbereich,

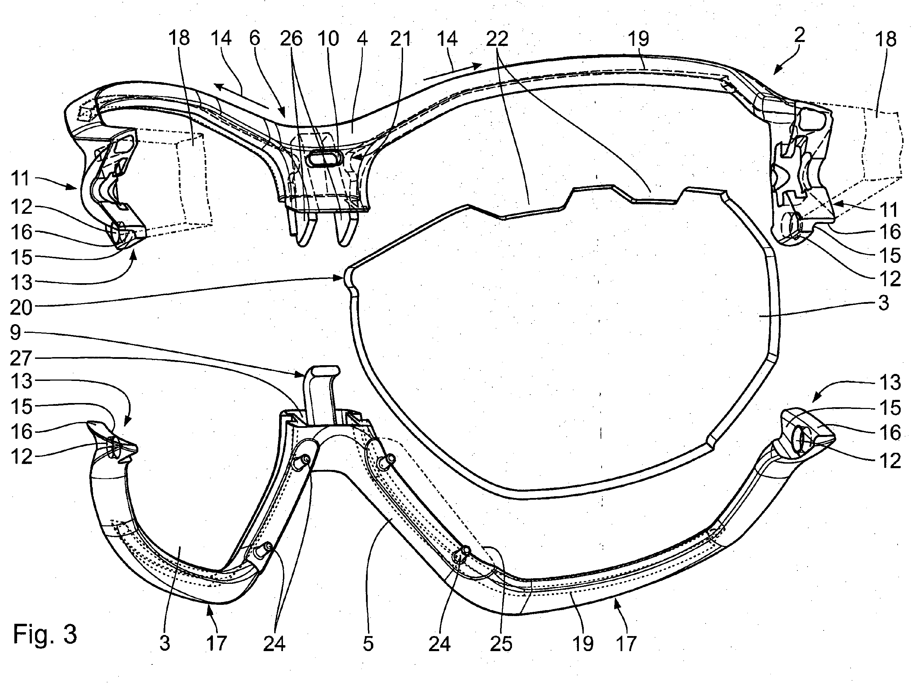

- Fig. 3: eine Darstellung gemäß Fig. 1, wobei die beiden Rahmenteile voneinander getrennt sind,
- Fig. 4: eine Detailansicht des Rastmechanismus der beiden Rahmenteile im Mittenbereich, und
- Fig. 5: eine Detailansicht einer alternativen Ausführungsform der lösbaren Verbindung der Rahmenteile im Seitenbereich.

Eine Brille 1 umfasst einen Rahmen 2, in welchem zwei Scheiben 3 auswechselbar angeordnet sind. Bei der Brille 1 handelt es sich insbesondere um eine Sportbrille oder um eine Sonnenbrille. Der Rahmen 2 ist vorteilhäfterweise aus Kunststoff. Auch die Scheiben 3 können aus Kunststoff sein. Sie können auch aus Glas sein. Die Scheiben 3 können auch zusammenhängend ausgebildet sein. Allgemein umfasst die Brille 1 mindestens eine Scheibe 3.

Der Rahmen 2 umfasst ein erstes Rahmenteil 4 und ein zweites Rahmenteil 5. Er ist insbesondere zweiteilig ausgebildet. Bei dem ersten Rahmenteil 4 handelt es sich insbesondere um ein oberes Rahmenteil. Bei dem zweiten Rahmenteil 5 handelt es sich insbesondere um ein unteres Rahmenteil. Am ersten Rahmenteil 4 sind zwei Brillenbügel 18 befestigt. Die Brillenbügel 18 können am ersten Rahmenteil 4 angelenkt sein. Anstelle der Brillenbügel 18 kann auch ein elastisches Band vorgesehen sein. Die Rahmenteile 4, 5 sind in einem durch einen Mittelabschnitt 6 gebildeten ersten Bereich miteinander verbunden. Sie sind im Bereich des Mittelabschnitts 6 insbesondere lösbar, vorzugsweise verrastbar, miteinander verbunden. Dies ermöglicht es, das untere Rahmenteil 5 auszuwechseln. Das untere Rahmenteil 5 ist insbesondere auswechselbar. Zur verrastbaren Verbindung der Rahmenteile 4, 5 im Bereich des Mittelabschnitts 6 weist das untere Rahmenteil 5 einen in einer Longitudinalrichtung 7 ausgerichteten Steg 8 mit einer Rastnase 9 auf. Die Rastnase 9 ist an eine Einrastöffnung 10 im oberen Rahmenteil 4 angepasst ausgebildet. Der Steg 8 ist in Sagittalrichtung leicht flexibel ausgebildet, um ein Verrasten der Rastnase 9 in der Einrastöffnung 10 zu ermöglichen. Die Richtungsangaben longitudinal, sagittal beziehen sich hierbei auf die Brille im aufgesetzten Zustand und stimmen mit den entsprechenden Richtungen des Trägers der Brille überein.

Die Rahmenteile 4, 5 können im Bereich des Mittelabschnitts 6 auch fest miteinander verbunden sein.

Zur Verbesserung, insbesondere Stabilisierung, der Verbindung der beiden Rahmenteile 4, 5 sind im Mittelabschnitt 6 Führungsstege 26 vorgesehen, welche in eine dazu passende Führungsausnehmung 27 im zweiten Rahmenteil 5 eingreifen.

Die Führungsstege 26 sind insbesondere profiliert ausgebildet. Die Führungsausnehmung 27 weist ein entsprechendes, komplementäres Profil auf. Sie kann insbesondere T-förmig ausgebildet sein. Das Zusammenwirken der Führungsstege 26 mit der Führungsausnehmung 27 führt dazu, dass das zweite Rahmenteil 5 beim Einsetzen in das erste Rahmenteil 4 geführt einrastet. Nach der verrasteten Verbindung der Rahmenteile 4, 5 ist ein Wechseln der Scheibe 3 durch Lösen der Verbindung der Rahmenteile 4, 5 in einem Seitenbereich 11 möglich.

Um ein Auswechseln der Scheiben 3 zu ermöglichen, sind die Rahmenteile 4, 5 jeweils im Seitenbereich 11 lösbar miteinander verbunden. Die Verbindung kann hierbei durch einen nachfolgend noch näher beschriebenen Anlagebereich ausgebildet sein. Zur Sicherung der lösbaren Verbindung der beiden Rahmenteile 4, 5 sind als ferromagnetische Elemente 12 ausgebildete Sicherungsmittel vorgesehen. Die ferromagnetischen Elemente 12 sind jeweils derart in den Rahmenteilen 4, 5 angeordnet, dass das ferromagnetische Elemente 12 im oberen Rahmenteil 4 mit dem ferromagnetischen Teil im unteren Rahmenteil 5 zusammenwirkt.

Die ferromagnetischen Elemente 12 sind jeweils in formschlüssig aneinander angepasste Sicherungsabschnitte 13 der Rahmenteile 4, 5 integriert. Die Sicherungsabschnitte 13 weisen eine sich in Temporalrichtung 14, d. h. lateral erstreckende, parallel zur Longitudinalrichtung 7 ausgerichtete erste Anlagefläche 15 auf. Die erste Anlagefläche 15 ist insbesondere von der Vorderseite der Brille 1 aus frei zugänglich.

Die ferromagnetischen Elemente 12 sind jeweils in die Anlagefläche 15 integriert. Sie sind formschlüssig ein einer entsprechenden, zylinderförmigen Ausnehmung in der ersten Anlagefläche 15 angeordnet. Die ferromagnetischen Elemente 12 sind insbesondere in den Rahmenteilen 4, 5 verklebt. Sie sind allgemein gegen ein unbeabsichtigtes Entfernen aus den Rahmenteilen 4, 5 gesichert. Sie sind derart in den Rahmenteilen 4, 5 angeordnet, dass ihre Oberfläche schlüssig mit der Anlagefläche 15 abschließt. Im geschlossenen Zustand des Rahmens 2 liegen die ferromagnetischen Elemente 12 somit vorteilhafterweise aneinander an. Sie sind insbesondere derart angeordnet, dass der Nordpol des einen Magneten dem Südpol des anderen Magneten zugewandt ist. Sie sind somit insbesondere derart angeordnet, dass sie eine anziehende Kraft aufeinander ausüben. Mittels der ferromagnetischen Elemente 12 ist eine Haltekraft von mindestens 1 N, insbesondere mindestens 5 N, insbesondere mindestens 10 N, erzeugbar.

Weiterhin sind sie derart angeordnet, dass sie im geschlossenen Zustand des Rahmens 2 eine gemeinsame zentrale Achse aufweisen

Die ferromagnetischen Elemente 12 sind insbesondere zylinderförmig ausgebildet. Sie weisen einen Durchmesser von etwa 4 mm und eine Höhe von etwa 1,5 mm auf. Allgemein liegt der Durchmesser der ferromagnetischen Elemente 12 im Bereich von 2 mm bis 1 cm, insbesondere im Bereich von 3 mm bis 5 mm. Die Höhe der ferromagnetischen Elemente 12 liegt insbesondere im Bereich von 1 mm bis 3 mm. Die ferromagnetischen Elemente 12 können auch quaderförmig ausgebildet sein.

Die miteinander zusammenwirkenden ferromagnetischen Elemente 12 können jeweils beide als Magnete ausgebildet sein. Es ist auch möglich, lediglich eines der ferromagnetischen Elemente als Magnet und das mit diesem zusammenwirkende Element aus einem magnetisierbaren Material auszubilden.

Die Rahmenteile 4, 5, insbesondere die die Verbindung bildenden Sicherungsabschnitte 13, weisen außerdem im Seitenbereich 11 eine zweite Anlagefläche 16 auf, welche jeweils quer zur Longitudinalrichtung 7 ausgerichtet ist. Die zweite Anlagefläche ist jeweils in Longitudinalrichtung frei zugänglich. Vorzugsweise grenzen die beiden Anlageflächen 15, 16 jeweils direkt aneinander an und bilden somit eine Anlageschulter. Hierdurch wird die Verschlussposition der beiden Rahmenteile 4, 5 auf einfache Weise sehr präzise festgelegt.

Um ein Lösen der Verbindung der Rahmenteile 4, 5 im Seitenbereich 11 zu ermöglichen, weist das untere Rahmenteil 5 einen flexibel ausgebildeten Bereich 17 auf, welcher eine Verschwenkbarkeit ermöglicht. Allgemein ist mindesten eines der Rahmenteile 4, 5 zumindest bereichsweise verschwenkbar ausgebildet. Die Flexibilität des Bereichs 17 kann durch Verwendung eines weicheren. flexibleren Materials in diesem Bereich erreicht werden. Es ist auch möglich, das Rahmenteil 5 in diesem Bereich dünner auszubilden, wodurch ebenfalls eine Verschwenkbarkeit erreichbar ist. Durch eine geeignete geometrische Ausbildung des flexiblen Bereichs 17 lässt sich die Verschwenkbarkeit, insbesondere die Freiheitsgrade derselben gezielt beeinflussen. Allgemein ist mindestens eines der Rahmenteile 4, 5, insbesondere das untere Rahmenteil 5, in mindestens einer Richtung verschwenkbar, Es kann auch in zwei oder mehr Richtungen verschwenkbar ausgebildet sein,

Es ist auch möglich, zur Verschwenkbarkeit des Rahmenteils 5 dieses mit einem Gelenk-Element, insbesondere einem Scharnier-, Schwenk- oder Drehgelenk auszubilden.

Die Rahmenteile 4, 5 weisen jeweils eine nutartige Vertiefung 19 auf, in welche die Scheibe 3 einsetzbar ist. Die Scheibe 3 ist insbesondere formschlüssig in die Vertiefung 19 einsetzbar. Allgemein ausgedrückt, bildet die Vertiefung 19 eine Führungsausnehmung zur zumindest abschnittsweisen Aufnahme eines Randbereichs der Scheibe 3. Die Vertiefung 19 hat eine Tiefe im Bereich von 1 bis 3 mm. Sie ist derart ausgebildet, dass die Vertiefung 19 im zweiten Rahmenteil 5 eine Fortsetzung, insbesondere eine stufenlose Fortsetzung, der Vertiefung 19 im ersten Rahmenteil 4 bildet.

Der Randbereich der Scheibe 3 weist eine Rastnase 20 auf, welche mit einer dazu passenden Hinterschneidung 21 im oberen Rahmenteil 4 zur Fixierung der Scheibe 3 im Rahmen 2 zusammenwirkt. Die Rastnase 20 und die Hinterschneidung 21 sind insbesondre im Mittelabschnitt 6 der Brille 1 angeordnet. Durch das Zusammenwirken der Rastnase 20 mit der Hinterschneidung 21 wird der sichere Sitz der Scheibe 3 im Rahmen 2 verbessert. In der Scheibe 3 sind Lüftungsöffnungen 22 vorgesehen. Außerdem kann im Seitenbereich 11 eine Lüftungsöffnung 23 zwischen den Rahmenteilen 4, 5 und der Scheibe 3 ausgebildet sein. Allgemein ist zwischen den Rahmenteilen 4, 5 und der mindestens einen Scheibe 3 mindestens eine Lüftungsöffnung 22, 23, insbesondere mehrere Lüftungsöffnungen 22, 23 ausgebildet.

Weiterhin sind am unteren Rahmenteil 5 Befestigungselemente 24 zur Befestigung von Nasenauflagen 25 vorgesehen. Die Befestigungselemente 24 können als Befestigungsstifte ausgebildet sein, auf welche die Nasenauflagen 25 aufsteckbar sind. Die Nasenauflagen 25 sind aus Kunststoff oder Silikon. Prinzipiell ist es auch denkbar, die Nasenauflagen in das zweite Rahmenteil 5 zu integrieren.

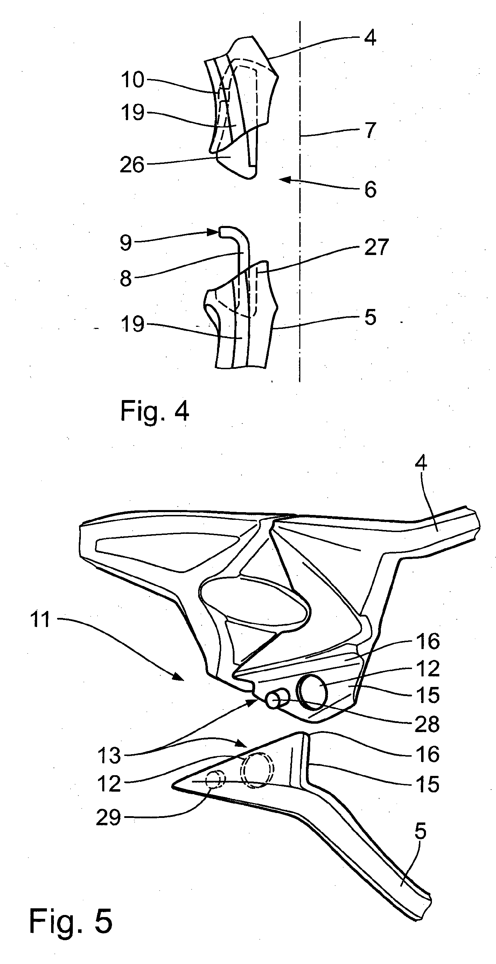

In einer weiteren, in Fig. 5 dargestellten Ausführungsform, ist die Verbindung der Rahmenteile 4, 5 im Seitenbereich 11 zusätzlich zu den ferromagnetischen Elementen 12 durch mechanische Elemente gesichert. Bei den mechanischen Elementen handelt es sich insbesondere um einen zylinderförmigen Vorsprung 28 am ersten Rahmenteil 4, welcher in eine dazu passende, sacklochartige Ausnehmung 29 im zweiten Rahmenteil 5 eingreift. Der Vorsprung 28 und die Ausnehmung 29 sind jeweils im Sicherungsabschnitt 13 angeordnet. Sie können auch derart angeordnet sein, dass der Vorsprung 28 im zweiten Rahmenteil 5 und die Ausnehmung 29 im ersten Rahmenteil 4 angeordnet ist. Durch die mechanischen Sicherungselemente 28, 29 kann erreicht werden, dass die Sicherungsabschnitte 13 des ersten und zweiten Rahmenteils 4, 5 im miteinander verbundenen Zustand ausschließlich in einer Richtung, insbesondere ausschließlich in Richtung senkrecht zu den Anlageflächen 15, 16 beweglich sind. Die mechanischen Sicherungsmittel 28, 29 verhindern insbesondere eine Verschiebbarkeit der Rahmenteile 4, 5 in Richtung quer zur Kraft, welche durch die magnetischen Elemente 12 erzeugt wird.

Gemäß einer weiteren, nicht dargestellten Ausfuhrungsform, sind die ferromagnetischen Elemente 12 vollständig in die Rahmenteile 4, 5 integriert. Sie sind insbesondere vollständig vom Material des jeweiligen Rahmenteils 4, 5 umgeben. Sie sind mit anderen Worten verdeckt in den Rahmenteilen 4, 5 angeordnet. Dadurch sind sie sicher gegen ein unbeabsichtigtes Herausfallen gesichert.

Gemäß einer weiteren Ausführungsform ist vorgesehen, die ferromagnetischen Elemente 12 schraubenartig auszubilden, insbesondere mit einem Außengewinde zu versehen. Sie können dann in ein dazu passendes Innengewinde im jeweiligen Rahmenteil 4, 5 eingeschraubt werden.

## Patentansprüche

1. Brille (1) umfassend
a. wenigstens eine Scheibe (3) und
b. einen Rahmen (2) mit
i. einem ersten Rahmenteil (4) und
ii. einem zweiten Rahmenteil (5),
c. wobei die mindestens eine Scheibe (3) auswechselbar im Rahmen (2) angeordnet ist, und
d. wobei die Rahmenteile (4, 5)
i. in einem ersten Bereich (6) miteinander verbunden sind,
ii. ein Auswechseln der mindestens einen Scheibe (3) ermöglichend in mindestens einem zweiten Bereich (11) jeweils lösbar miteinander verbunden sind und
iii. zur Sicherung der lösbaren Verbindung im zweiten Bereich (11) jeweils mindestens ein Sicherungsmittel umfassen,
e. wobei die Sicherungsmittel als ferromagnetische Elemente (12) ausgebildet sind, und
f. wobei die ferromagnetischen Elemente (12) derart angeordnet sind, dass jeweils mindestens ein ferromagnetisches Element (12) im ersten Rahmenteil (4) und mindestens ein ferromagnetisches Element (12) im zweiten Rahmenteil (5) zusammenwirken
g. wobei die Rahmenteile (4, 5) in dem durch einen Seitenbereich gebildeten zweiten Bereich (11) jeweils 13. eine parallel zu einer Longitudinalrichtung (7) ausgerichtete Anlagefläche (15) aufweisen, wobei die Longitudinalrichtung der Longitudinalrichtung des Trägers der Brille in aufgesetztem Zustand entspricht,
h. wobei die ferromagnetischen Elemente (12) jeweils in die Anlagefläche (15) integriert sind, und
i. wobei die ferromagnetischen Elemente (12) im geschlossenen Zustand des Rahmens (2) aneinander anliegen.

2. Brille (1) gemäß Anspruch 1, **dadurch gekennzeichnet, dass** die ferromagnetischen Elemente (12) jeweils in formschlüssig aneinander angepasste Sicherungsabschnitte der Rahmenteile (4, 5) integriert sind.

3. Brille (1) gemäß Anspruch 2, **dadurch gekennzeichnet, dass** die parallel zur Longitudinalrichtung (7) ausgerichtete Anlagefläche (15) eines der Rahmenteile (4, 5) von einer Vorderseite der Brille (1) aus frei zugänglich ist.

4. Brille (1) gemäß einem der vorhergehenden Ansprüche, **dadurch gekennzeichnet, dass** die Rahmenteile (4, 5) in dem Seitenbereich (11) jeweils eine quer zu der Longitudinalrichtung (7) ausgerichtete, in Longitudinalrichtung (7) frei zugängliche Anlagefläche (16) aufweisen.

5. Brille (1) gemäß einem der vorhergehenden Ansprüche, **dadurch gekennzeichnet, dass** mindestens eines der Rahmenteile (4, 5) zumindest bereichsweise verschwenkbar ist.

6. Brille (1) gemäß einem der vorhergehenden Ansprüche, **dadurch gekennzeichnet, dass** mindestens eines der Rahmenteile (4, 5) aus Kunststoff ist.

7. Brille (1) gemäß einem der vorhergehenden Ansprüche, **dadurch gekennzeichnet, dass** die Rahmenteile (4, 5) in dem durch einen Mittenabschnitt gebildeten ersten Bereich (6) lösbar miteinander verbunden sind.

8. Brille (1) gemäß einem der vorhergehenden Ansprüche, **dadurch gekennzeichnet, dass** das eine der Rahmenteile (4, 5) auswechselbar ist.

9. Brille (1) gemäß einem der Ansprüche 1 bis 6, **dadurch gekennzeichnet, dass** die Rahmenteile (4, 5) im ersten Bereich (6) fest miteinander verbunden sind.

10. Brille (1) gemäß einem der vorhergehenden Ansprüche, **dadurch gekennzeichnet, dass** die Rahmenteile (4, 5) Führungsausnehmungen (19) zur zumindest abschnittsweisen Aufnahme eines Randbereichs der mindestens einen Scheibe (3) aufweisen.

11. Brille (1) gemäß Anspruch 10, **dadurch gekennzeichnet, dass** die Führungsausnehmung jeweils als nutartige Vertiefung (19) ausgebildet ist, in welche die Scheibe (3) einsetzbar ist.

12. Brille (1) gemäß einem der vorhergehenden Ansprüche, **dadurch gekennzeichnet, dass** die Scheibe (3) mindestens eine Rastnase (20) aufweist, welche mit einer dazu passenden Hinterschneidung (21) in einem der Rahmenteile (4, 5) zur Fixierung der Scheibe (3) im Rahmen (2) zusammenwirkt.

13. Brille (1) gemäß einem der vorhergehenden Ansprüche, **dadurch gekennzeichnet, dass** zwischen den Rahmenteilen (4, 5) und der mindestens einen Scheibe (3) mindestens eine Lüftungsöffnung (22, 23), insbesondere mehrere Lüftungsöffnungen (22, 23) ausgebildet sind.

14. Brille gemäß einem der vorhergehenden Ansprüche, **dadurch gekennzeichnet, dass** die Verbindung der Rahmenteile (4, 5) im zweiten Bereich (11) zusätzlich zu den ferromagnetischen Elementen (12) durch mechanische Elemente gesichert ist.

## Claims

1. Spectacles (1) comprising
a. at least one lens (3) and
b. a frame (2) comprising
i. a first frame part (4) and
ii. a second frame part (5),
c. wherein the at least one lens (3) is arranged in the frame (2) in such a way as to be exchangeable, and
d. wherein the frame parts (4, 5)
i. are interconnected in a first area (6),
ii. are in each case releasably interconnected in a second area (11), thus allowing the at least one lens (3) to be exchanged, and
iii. comprise in each case at least one securing means for securing the releasable connection in the second area (11),
e. wherein the securing means are configured as ferromagnetic elements (12), and
f. wherein the ferromagnetic elements (12) are arranged such that in each case at least one ferromagnetic element (12) in the first frame part (4) and at least one ferromagnetic element (12) in the second frame part (5) interact with each other,
g. wherein the second area (11), which is formed by a side area, of each of the frame parts (4, 5) is each provided with a contact surface (15) which is parallel to a longitudinal direction (7), wherein the longitudinal direction corresponds to the longitudinal direction of the wearer of the spectacles when worn,
h. wherein the ferromagnetic elements (12) are each integrated into the contact surface (15), and
i. wherein the ferromagnetic elements (12) abut against each other when the frame (2) is closed.

2. Spectacles (1) according to claim 1, **characterized in that** the ferromagnetic elements (12) are in each case integrated into securing portions of the frame parts (4, 5) which are adapted to each other in such a way that a positive fit is produced.

3. Spectacles (1) according to claim 2, **characterized in that** the contact surface (15) of one of the frame parts (4, 5), which is parallel to the longitudinal direction (7), is freely accessible from a front side of the spectacles (1).

4. Spectacles (1) according to one of the above claims, **characterized in that** the side area (11) of each of the frame parts (4, 5) is in each case provided with one contact surface (16) which is freely accessible in the longitudinal direction (7) and is transverse to the longitudinal direction (7).

5. Spectacles (1) according to one of the above claims, **characterized in that** at least one of the frame parts (4, 5) is at least partially pivotable.

6. Spectacles (1) according to one of the above claims, **characterized in that** at least one of the frame parts (4, 5) is made of plastics.

7. Spectacles (1) according to one of the above claims, **characterized in that** the frame parts (4, 5) are releasably interconnected in the first area formed by a central portion (6).

8. Spectacles (1) according to one of the above claims, **characterized in that** one of the frame parts (4, 5) is exchangeable.

9. Spectacles (1) according to one of claims 1 to 6, **characterized in that** the frame parts (4, 5) are rigidly interconnected in the first area (6).

10. Spectacles (1) according to one of the above claims, **characterized in that** the frame parts (4, 5) have guide recesses (19) for at least partially receiving an edge area of the at least one lens (3).

11. Spectacles (1) according to claim 10, **characterized in that** the guide recess is in each case configured as a groove-like recess (19) into which the lens (3) is insertable.

12. Spectacles (1) according to one of the above claims, **characterized in that** the lens (3) is provided with at least one snap-in protrusion (20) which interacts with a corresponding recess (21) in one of the frame parts (4, 5) for securing the lens (3) in the frame (2).

13. Spectacles (1) according to one of the above claims, **characterized in that** at least one air inlet (22, 23), in particular several air inlets (22, 23), are formed between the frame parts (4, 5) and the at least one lens (3).

14. Spectacles (1) according to one of the above claims, **characterized in that** the connection of the frame parts (4, 5) in the second area (11) is secured by mechanical elements which are provided in addition to the ferromagnetic elements (12).

## Revendications

1. Lunettes (1) comprenant
a. au moins un verre (3) et
b. une monture (2) comportant
i. une première partie de monture (4) et
ii. une seconde partie de monture (5),
c. au moins un verre (3), pouvant être échangé, étant disposé dans la monture (2), et
d. les parties de monture (4, 5)
i. étant reliées ensemble dans une première zone (6),
ii. étant reliées ensemble, détachables respectivement, dans au moins une seconde zone (11), permettant l'échange d'au moins un verre (3), et
iii. comportant chacune au moins un système de sécurisation pour la sécurisation de la liaison détachable dans la seconde zone (11),
e. les systèmes de sécurisation étant conçus sous forme d'éléments ferromagnétiques (12), et
f. les éléments ferromagnétiques (12) étant disposés de telle manière que, chaque fois, au moins un élément ferromagnétique (12) dans la première partie de monture (4) et au moins un élément ferromagnétique (12) dans la seconde partie de monture (5) agissent conjointement,
g. les parties de montures (4, 5) présentant une surface d'appui (15) orientée chaque fois parallèlement à une direction longitudinale (7) dans une seconde zone (11) formée par une zone latérale, la direction longitudinale du porteur de lunettes correspondant à la direction longitudinale lors de l'état de port des lunettes,
h. les éléments ferromagnétiques (12) étant intégrés chacun dans la surface d'appui (15), et
i. les éléments ferromagnétiques (12) étant adjacents l'un à l'autre dans l'état replié de la monture (2).

2. Lunettes (1) selon la revendication 1, **caractérisées en ce que** les éléments ferromagnétiques (12) sont intégrés chacun dans des portions de sécurisation des parties de monture (4, 5) ajustées entre elles par complémentarité des formes.

3. Lunettes (1) selon la revendication 1, **caractérisées en ce que** la surface d'appui (15) orientée parallèlement par rapport à la direction longitudinale (7) de l'une des parties de monture (4, 5) est librement accessible à partir de la face avant des lunettes (1).

4. Lunettes (1) selon l'une des revendications précédentes, **caractérisées en ce que** les parties de monture (4, 5) présentent une surface d'appui (16) librement accessible dans la direction longitudinale (7) orientée perpendiculairement à la direction longitudinale (7).

5. Lunettes (1) selon l'une des revendications précédentes, **caractérisées en ce qu'**au moins l'une des parties de monture (4, 5) peut être pivotée au moins partiellement.

6. Lunettes (1) selon l'une des revendications précédentes, **caractérisées en ce qu'**au moins l'une des parties de monture (4, 5) est en matière plastique.

7. Lunettes (1) selon l'une des revendications précédentes, **caractérisées en ce que** les parties de monture (4, 5) sont reliées entre elles, en pouvant être détachées, dans la première zone formée par une portion médiane (6).

8. Lunettes (1) selon l'une des revendications précédentes, **caractérisées en ce que** l'une des parties de monture (4, 5) peut être échangée.

9. Lunettes (1) selon l'une des revendications 1 à 6, **caractérisées en ce que** les parties de monture (4, 5) sont solidement reliées ensemble dans la première zone (6).

10. Lunettes (1) selon l'une des revendications précédentes, **caractérisées en ce que** les parties de monture (4, 5) présentent des évidements de guidage (19) destinés à l'admission au moins par portions d'une zone de bordure pour au moins un verre (3).

11. Lunettes (1) selon la revendication 10, **caractérisées en ce que** l'évidement de guidage est conçu sous la forme d'une cavité (19) en forme de rainure dans laquelle le verre (3) peut être inséré.

12. Lunettes (1) selon l'une des revendications précédentes, **caractérisées en ce que** le verre (3) présente au moins une saillie (20) en butée, qui agit conjointement avec une fixation de retenue (21), qui lui est complémentaire, dans une des parties de monture (4, 5) pour la fixation du verre (3) dans la monture (2).

13. Lunettes (1) selon l'une des revendications précédentes, **caractérisées en ce qu'**au moins un orifice d'aération (22, 23), en particulier, plusieurs orifices d'aération (22, 23), est (sont) formé(s) entre les parties de monture (4, 5) et au moins un verre (3).

14. Lunettes (1) selon l'une des revendications précédentes, **caractérisées en ce que** la liaison des parties de monture (4, 5) dans la seconde zone (11) est sécurisée de manière complémentaire aux éléments ferromagnétiques (12) par des éléments mécaniques.
